# EUROPEAN PATENT APPLICATION

(11) **EP 2 028 853 A2**
(43) Date of publication of application: **25.02.2009**
(21) Application number: 08162682.2
(22) Date of filing: 20.08.2008
(51) Int. Cl.: H04N 5/775

(54) **Video signal repeating device with display resolution information management**

(30) Priority: 24.08.2007 JP 2007217777
(71) Applicant: Sony Corporation, Tokyo (JP)
(72) Inventor: OIKAWA, Mitsuki, TOKYO (JP)
(74) Representative: Thévenet, Jean-Bruno

(57) **Abstract**

Disclosed herein is an electronic device including: a signal receiving block (141) configured to receive a video signal transmitted from a preceding electronic device (120) connected via a first transmission route (210); a signal transmitting block (142) configured to transmit the video signal received at the signal receiving block (141) to a succeeding electronic device (160) connected via a second transmission route (220); a storage block configured to store information of image-receivable resolution for the preceding electronic device (120) to get the video signal via the first transmission route (210); an information capturing block configured to capture information of image-receivable resolution from the succeeding electronic device (160) via the second transmission route (220); and an information rewriting block configured to rewrite the information of the information of image-receivable resolution stored in the storage block on the basis of the information of image-receivable resolution captured by the information capturing block.

## Description

### CROSS REFERENCES TO RELATED APPLICATIONS

The present invention contains subject matter related to Japanese Patent Application JP 2007-217777 filed in the Japan Patent Office on August 24, 2007.

### BACKGROUND OF THE INVENTION

### 1. Field of the Invention

The present invention relates to an electronic device configured to relay video signals. More specifically, the present invention relates to an electronic device which is configured to rewrite the information of a resolution allowing image reception stored in a storage block to be received by a preceding-stage electronic device on the basis of the information of resolution allowing image reception obtained from a succeeding-stage electronic device so as to enable the supplying of the image-receivable-image resolution information with the image-receivable-image resolution of the succeeding-stage electronic device to the preceding-stage electronic device, thereby providing good image display on the succeeding-stage electronic device.

### 2. Description of the Related Art

Recently, HDMI (High Definition Multimedia Interface) has been gaining popularity as a communications interface in which digital video signals, namely, non-compressed (baseband) video signals (hereafter referred to as "image data") and digital audio signals (hereafter referred to as "audio data") accompanying the image data are transmitted at high speeds from a DVD (Digital Versatile Disc) recorder, a set-top box, and other AV (Audio Visual) sources to a television receiver, a projector, and other display devices (refer to Japanese Patent Laid-Open No. 2006-319503, for example). In this case, an AV source can get EDID (Enhanced Extended Display Identification) information from a connected display device to output thereto a video signal having a resolution corresponding to the image-receivable resolution of that display device on the basis of the information of the image-receivable resolution contained in the EDID information.

The HDMI standard allows the transmission of a video signal from an AV source to a display device via one or more electronic devices that provide repeaters (refer to Japanese Patent Laid-Open No. 2006-186544 for example). For example, a repeater may be a display device having a repeater capability, namely a television receiver, for example. Use of a display device of this type can configure an AV system in which two or more display devices are connected in series on the side of succeeding stage of an AV source.

### SUMMARY OF THE INVENTION

In the above-mentioned AV system in which two or more display devices are connected in series on the side of succeeding stage of an AV source, the AV source gets the EDID information and, on the basis of the information of image-receivable resolution contained in the obtained EDID information, determines what resolution should be given to an output video signal. So, with a display device not directly connected to the AV source, the resolution of a video signal to be outputted from the AV source may be higher than the image-receivable resolution of that display device, thereby failing the reception of image.

Therefore, the present invention addresses the above-identified and other problems associated with related-art methods and apparatuses and solves the addressed problems by supplying the information of the image-receivable resolution with the image-receivable resolution of an electronic device on the side of succeeding stage considered to an electronic device on the side of preceding stage, thereby providing good image display on the succeeding-stage electronic device.

In carrying out the invention and according to one embodiment thereof, there is provided an electronic device. This electronic device has a signal receiving block configured to receive a video signal transmitted from a preceding electronic device connected via a first transmission route; a signal transmitting block configured to transmit the video signal received at the signal receiving block to a succeeding electronic device connected via a second transmission route; a storage block configured to store information of image-receivable resolution for the preceding electronic device to get the video signal via the first transmission route; an information capturing block configured to capture information of image-receivable resolution from the succeeding electronic device via the second transmission route; and an information rewriting block configured to rewrite the information of the information of image-receivable resolution stored in the storage block on the basis of the information of image-receivable resolution captured by the information capturing block.

The above-mentioned electronic device according to the invention has a repeater capability. Namely, a video signal transmitted from a preceding electronic device connected via a first transmission route is received by the signal receiving block. Next, this video signal is transmitted to a succeeding electronic device connected via a second transmission route.

The above-mentioned electronic device according to the invention is connected to the preceding electronic device and the succeeding electronic device by use of an HDMI communications interface, for example. Namely, the signal receiving block receives a video signal transmitted from the preceding electronic device in a differential signal via the first transmission route over two or more channels. The signal transmitting block transmits the video signal received by the signal receiving block to the succeeding electronic device in a differential signal via the second transmission route over two or more channels.

When the succeeding electronic device is connected, the information capturing block captures the information of image-receivable resolution from this succeeding electronic device via the second transmission route. Then, on the basis of the received information of image-receivable resolution, the information rewriting block rewrites the information of image-receivable resolution stored in the storage block.

For example, if the first resolution indicated by the information of image-receivable resolution captured by the information capturing block is lower than the second resolution indicated by the information of image-receivable resolution stored in the storage block, the information rewriting block rewrites the information of image-receivable resolution stored in the storage block so as to indicate the first resolution. Also, for example, the information rewriting block rewrites the information of image-receivable resolution stored in the storage block so as to indicate the resolution indicated by the information of image-receivable resolution captured by the information capturing block.

Rewriting the information of image-receivable resolution stored in the storage block on the basis of the information of image-receivable resolution obtained from the succeeding electronic device allows the supplying, to the preceding electronic device, of the information of image-receivable resolution with the image-receivable resolution of the succeeding electronic device considered, thereby providing good image display on the succeeding electronic device.

The above-mentioned electronic device according to the invention may have a signal generating block configured to generate a connection-indicative signal to be supplied to the preceding electronic device connected via the first transmission route; and a control block configured to, when the information of image-receivable resolution stored in the storage block is rewritten by the information rewriting block, temporarily stop the generation of the connection-indicative signal by the signal generating block.

The preceding electronic device connected via the first transmission route gets, at the time of this connection, the information of image-receivable resolution stored in the storage block. As described above, the generation of a signal indicative of connection by the signal generating block is temporarily stopped by the control block to connect the succeeding electronic device after the connection of the preceding electronic device and the information of image-receivable resolution stored in the storage block is rewritten, the preceding electronic device becomes capable of getting the rewritten information of image-receivable resolution from the storage block.

The above-mentioned electronic device according to the invention may also have a broadcast receiving block configured to receive a video signal of a predetermined broadcast program on the basis of a broadcast signal; a switching block configured to selectively output one of the video signal received by the broadcast receiving block and the video signal received by the signal receiving block; and an image display block configured to display an image based on the video signal outputted from the switching block. In this case, the electronic device according to the invention makes up a television receiver having a repeater capability.

If, in the embodiments of the present invention, there are two or more succeeding electronic devices, the information capturing block may capture the information of image-receivable resolution from two or more electronic devices via the second transmission route and the information rewriting block may rewrite the information of image-receivable resolution stored in the storage block on the basis of the information of two or more image-receivable resolutions obtained by the information capturing block.

For example, of the resolutions indicated by the information of two or more image-receivable resolutions obtained by the information capturing block, the information rewriting block rewrites the information of image-receivable resolution stored in the storage block so as to indicate the lowest resolution. Also, for example, of the resolutions indicated by the information of two or more image-receivable resolutions obtained by the information capturing block, the information rewriting block rewrites the information of image-receivable resolution stored in the storage block so as to indicate the highest resolution. For example, again, of the resolutions indicated by the information of two or more image-receivable resolutions obtained by the information capturing block, the information rewriting block rewrites the information of image-receivable resolution stored in the storage block so as to indicate the intermediate resolution.

Thus, rewriting the information of image-receivable resolution stored in the storage block on the basis of the information of image-receivable resolutions obtained from two or more succeeding electronic devices allows the supplying, to the preceding electronic device, of the information of image-receivable resolution with the image-receivable resolutions of two or more succeeding electronic devices considered, thereby providing good image display on the two or more succeeding electronic devices.

As described and according to the invention, the information of image-receivable resolution stored in the storage block to be obtained by the preceding electronic device is rewritten on the basis of the information of image-receivable resolution obtained from the succeeding electronic device. This novel configuration allows the supplying, to the preceding electronic device, of the information of image-receivable resolution with the image of image-receivable resolution of the succeeding electronic device considered, thereby providing good video display on the succeeding electronic device.

### BRIEF DESCRIPTION OF THE DRAWINGS

FIG. 1 is a block diagram illustrating an exemplary configuration of an AV system practiced as one embodiment of the invention;
FIG. 2 is a block diagram illustrating an exemplary configuration of a DVD recorder (a source device) making up the AV system;
FIG. 3 is a block diagram illustrating an exemplary configuration of a television receiver (a repeater device) making up the AV system;
FIG. 4 is a block diagram illustrating a television receiver (a sink device) making up the AV system;
FIG. 5 is a block diagram illustrating an exemplary configuration of an HDMI transmission block (an HDMI source) and an HDMI reception block (an HDMI sink);
FIG. 6 is a diagram illustrating a TMDS transmission data structure;
FIG. 7 shows a pin arrangement (type A) of an HDMI terminal;
FIG. 8 is a block diagram illustrating an exemplary configuration practiced as another embodiment of the invention;
FIG. 9 is a block diagram illustrating an exemplary configuration of an AV system practiced as still another embodiment of the invention; and
FIG. 10 is a block diagram illustrating an exemplary configuration of a television receiver (a repeater device) making up the AV system.

### DETAILED DESCRIPTION OF THE PREFERRED EMBODIMENTS

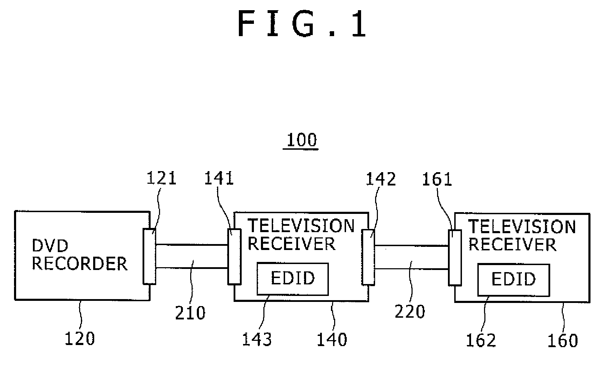

This invention will be described in further detail by way of embodiments thereof with reference to the accompanying drawings. Now, referring to FIG. 1, there is shown an exemplary configuration of an AV system 100 practiced as one embodiment of the invention.

The AV system 100 has a DVD recorder 120, a television receiver 140, and a television receiver 160. The DVD recorder 120 makes up an HDMI source device. The television receiver 140 has a repeater capability and makes up an HDMI repeater device. The television receiver 160 makes up an HDMI sink device.

The DVD recorder 120 and the television receiver 140 are interconnected by an HDMI cable 210. Namely, one end of the HDMI cable 210 is connected to an HDMI terminal 121 of the DVD recorder 120 and the other end is connected to an HDMI terminal 141 on the input side of the television receiver 140. The television receiver 140 and the television receiver 160 are interconnected by an HDMI cable 220. Namely, one end of the HDMI cable 220 is connected to an HDMI terminal 142 on the output side of the television receiver 140 and the other end is connected to an HDMI terminal 161 of the television receiver 160.

The television receiver 140 has a flash ROM 143 as a storage block. The flash ROM 143 stores EDID (Enhanced-Extended Display Identification) information and so on. This EDID information also includes the information of the image-receivable resolution of the television receiver 140. Likewise, the television receiver 160 has a flash ROM 162 as a storage block. This flash ROM 162 stores EDID information and so on. This EDID information also includes the information of the image-receivable resolution of the television receiver 160.

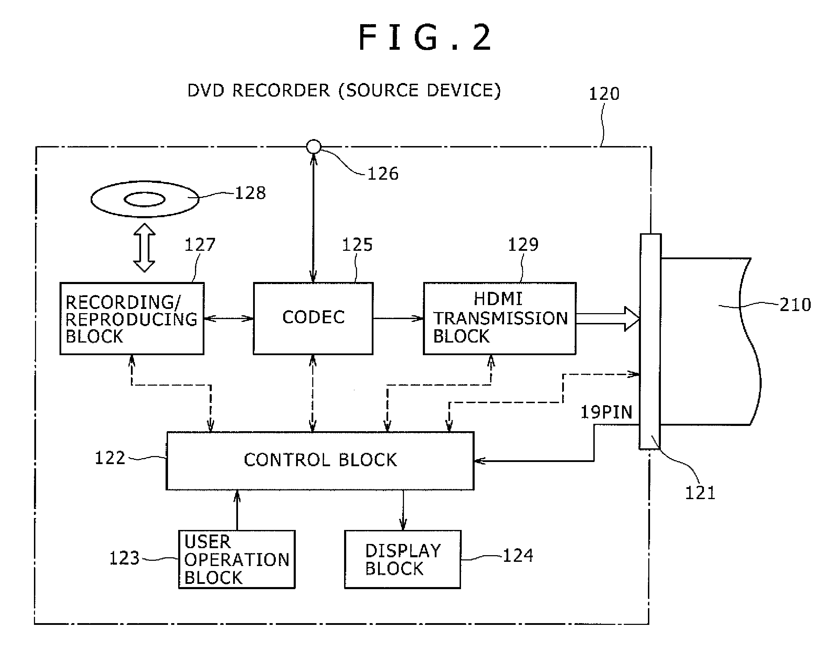

Referring to FIG. 2, there is shown an exemplary configuration of the DVD recorder 120. The DVD recorder 120 has the HDMI terminal 121, a control block 122, a user operation block 123, a display block 124, a codec 125, a terminal 126 for connection to an external device, a recording/reproducing block 127, and an HDMI transmission block (an HDMI source) 129.

The control block 122 controls the operation of each component blocks of the DVD recorder 120. The user operation block 123 and the display block 124 make up a user interface and are connected to the control block 122. The user operation block 123 is composed of keys, buttons, and other controls arranged on a housing, not shown, of the DVD recorder 120 and a touch panel for example arranged on a surface of the display block 124. The display block 124 is made up of an LCD (Liquid Crystal Display) device for example.

The recording/reproducing block 127 records, to a DVD 128, encoded data obtained by encoding, by MPEG (Moving Picture Experts Group) for example, image data (a video signal) and audio data (an audio signal) accompanying the image data supplied from the codec 125. Also, the recording/reproducing block 127 reproduces (or reads) the encoded data supplied from the DVD 128 and supplies the encoded data to the codec 125.

The codec 125 decodes the encoded data supplied from the recording/reproducing block 127 into baseband (non-compressed) image and audio data by MPEG for example and supplies the decoded data to the HDMI transmission block 129 and, at the same time, to the terminal 126. Also, the codec 125 encodes baseband image and audio data supplied from an external device, not shown, via the terminal 126 into encoded data, supplying the encoded data to the recording/reproducing block 127. The external device herein denotes an HD recorder, a personal computer, a DVD recorder, or a video camera, for example.

The HDMI transmission block 129 is connected to the HDMI terminal 121. By HDMI-compliant communication, the HDMI transmission block 129 unidirectionally transmits baseband image and audio data supplied from the codec 125 to the television receiver 140 from the HDMI terminal 121 via the HDMI cable 210. The HDMI transmission block 129 will be detailed later.

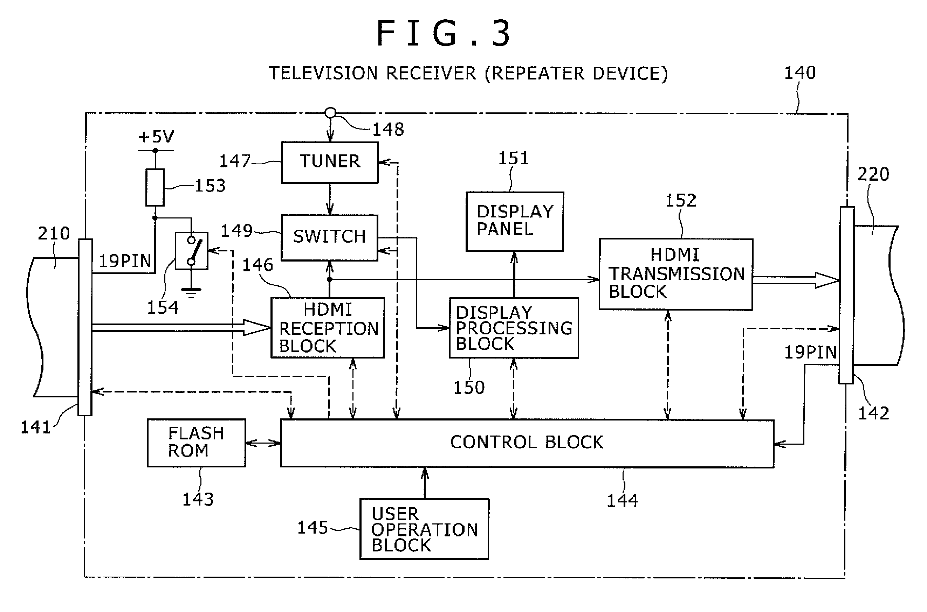

Referring to FIG. 3, there is shown an exemplary configuration of the television receiver 140. The television receiver 140 has an HDMI terminals 141 and 142, a flash ROM 143, a control block 144, a user operation block 145, an HDMI reception block (or an HDMI sink) 146, a tuner 147, an antenna terminal 148, a switch 149, a display processing block 150, a display panel 151, an HDMI transmission block (or an HDMI source) 152, a pullup resistor 153, and a connection switch 154.

The control block 144 controls the operation of each component of the television receiver 140. The user operation block 145 makes up a user interface and is connected to the control block 144. The user operation block 145 is composed of keys, buttons, and dials arranged on a housing, not shown, of the television receiver 140 and a remote controller, for example. The flash ROM 143 stores EDID information containing the information of image-receivable resolution of television receiver 140 as described above and is connected to the control block 144.

The HDMI reception block 146 is connected to the HDMI terminal 141. By HDMI-compliant communication, the HDMI reception block 146 receives baseband image data and audio data unidirectionally transmitted from the HDMI transmission block 129 of the DVD recorder 120 connected via the HDMI cable 210. The HDMI reception block 146 supplies the received image data to the switch 149. It should be noted that the audio data received by the HDMI reception block 146 is supplied to a switch for audio data. The HDMI reception block 146 makes up a signal reception block. The HDMI reception block 146 will be detailed later.

The tuner 147 receives BS broadcasting, digital terrestrial broadcasting, and so on, for example. The tuner 147 is supplied with broadcast signals caught by an antenna, not shown, connected to the antenna terminal 148. The tuner 147 gets image data (a video signal) and audio data of a predetermined broadcast program from the broad cast signals. The tuner 147 makes up a broadcast reception block. The switch 149 selectively takes out the image data received by the HDMI reception block 146 or the image data obtained by the tuner 147.

The display processing block 150 executes color adjustment, edge enhancement, or graphics data superimposition onto the image data taken out by the switch 149. The display panel 151 displays the image based on the image data processed by the display processing block 150. The display panel 151 is composed of an LCD device, an organic EL (Electro Luminescence) device, or a PDP (Plasma Display Panel) device, for example.

The HDMI transmission block 152 is connected to the HDMI terminal 142. By HDMI-compliant communication, the HDMI transmission block 152 unidirectionally transmits the baseband image and audio data received by the HDMI reception block 146 to the television receiver 160 from the HDMI terminal 142 via the HDMI cable 220. The HDMI transmission block 152 makes up a signal transmission block. The HDMI transmission block 152 will be detailed later.

As will be described later, a 19-pin of the HDMI terminal 141 provides an HPD (Hot Plug Detect) terminal. The 19-pin of the HDMI terminal 141 is connected to a +5V power supply via the pullup resistor 153. When the television receiver 140 is connected to the DVD recorder 120 via the HDMI cable 210, power is supplied from the DVD recorder 120, thereby raising the voltage of the 19-pin of the HDMI terminal 141. The control block 122 of the DVD recorder 120 is monitoring the voltage of the 19-pin of the HDMI terminal 121. When the voltage of the 19-pin goes high, the control block 122 confirms the connection of the television receiver 140. The pullup resistor 153 makes up a signal generator block configured to generate a signal indicative of the connection, this signal being supplied to the DVD recorder 120.

Also, the 19-pin of the HDMI terminal 141 is connected to ground via the connection switch 154. Under the control of control block 144, the connection switch 154 is temporarily turned on when the information of image-receivable resolution of the flash ROM 143 is rewritten as will be described later. As described above, when the television receiver 140 is connected to the DVD recorder 120 via the HDMI cable 210, the voltage of the 19-pin of the HDMI terminal 141 goes rises, entering a state in which the signal indicative of connection is generated. However, when the connection switch 154 is turned on, the voltage of the 19-pin of the HDMI terminal 141 lowers, thereby temporarily stopping the generation of the signal indicative of connection.

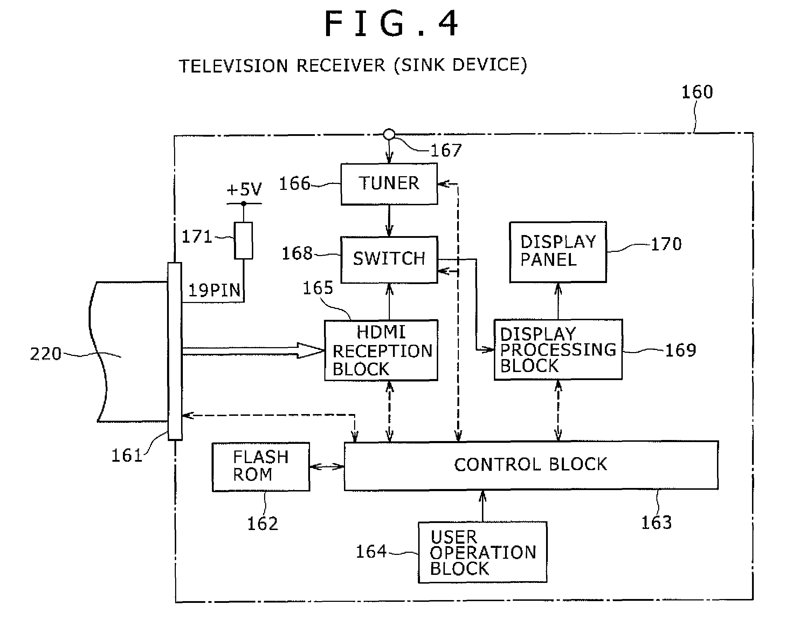

Referring to FIG. 4, there is shown an exemplary configuration of the television receiver 160. The television receiver 160 has an HDMI terminal 161, a flash ROM 162, a control block 163, a user operation block 164, an HDMI reception block (an HDMI sink) 165, a tuner 166, an antenna terminal 167, a switch 168, a display processing block 169, a display panel 170, and a pullup resistor 171.

The control block 163 controls the operation of each component of the television receiver 160. The user operation block 164 makes up a user interface and is connected to the control block 163. The user operation block 164 is composed of keys, buttons, and dials arranged on a housing, not shown, of the television receiver 160 and a remote controller, for example. The flash ROM 162 stores EDID information containing the information of image-receivable resolution of the television receiver 160 as described above and is connected to the control block 163.

The HDMI reception block 165 is connected to the HDMI terminal 161. By HDMI-compliant communication, the HDMI reception block 165 receives baseband image and audio data unidirectionally transmitted from the HDMI transmission block 152 of the television receiver 140 connected via the HDMI cable 220. The HDMI reception block 165 supplies the received data to the switch 168. It should be noted that the audio data received by the HDMI reception block 165 is supplied to a switch for audio data. The HDMI reception block 165 will be detailed later.

The tuner 166 receives BS broadcasting, digital terrestrial broadcasting, and so on, for example. The tuner 166 is supplied with broadcast signals caught by an antenna, now shown, connected to the antenna terminal 167. The tuner 166 gets image data (a video signal) and audio data of a predetermined broadcast program from the broadcast signals. The switch 168 selectively takes out the image data received by the HDMI reception block 165 or the image data obtained by the tuner 166.

The display processing block 169 executes color adjustment, edge enhancement, or graphics data superimposition onto the image data taken out by the switch 168. The display panel 170 displays the image based on the image data processed by the display processing block 169. The display panel 170 is composed of an LCD device, an organic EL device, or a PDP device, for example.

As will be described later, a 19-pin of the HDMI terminal 161 provides an HPD terminal. The 19-pin of the HDMI terminal 161 is connected to a +5V power supply via the pullup resistor 171. When the television receiver 160 is connected to the television receiver 140 via the HDMI cable 220, power is supplied from the television receiver 140, thereby raising the voltage of the 19-pin of the HDMI terminal 161. The control block 144 of the television receiver 140 is monitoring the voltage of the 19-pin of the HDMI terminal 142. When the voltage of the 19-pin of the HDMI terminal 142 goes high, the control block 144 confirms the connection of the television receiver 160.

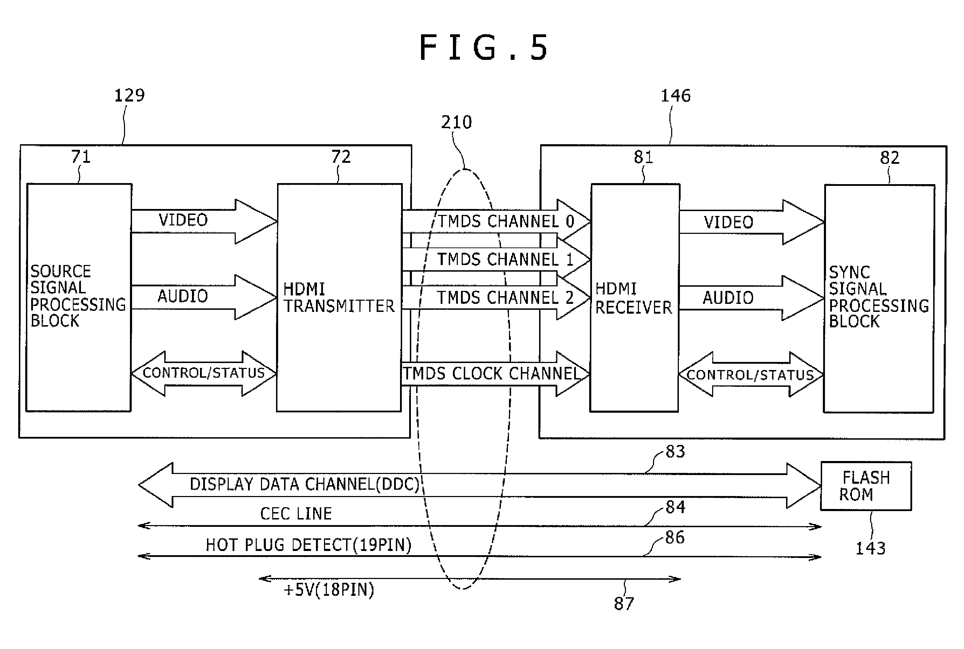

Referring to FIG. 5, there is shown an exemplary configuration of the HDMI transmission block (or the HDMI source) 129 of the DVD recorder 120 and the HDMI reception block (or the HDMI sink) 146 of the television receiver 140.

The HDMI transmission block 129 unidirectionally transmits a differential signal of baseband (non-compressed) image data for one screen to the HDMI reception block 146 on two or more channels between a period from a vertical sync signal to another vertical sync signal (hereafter appropriately referred to as "video field") and a valid image period that is a period with horizontal blanking and vertical blanking excluded (hereafter appropriately referred to as "active video period"). Also, in the horizontal blanking and the vertical blanking, the HDMI transmission block 129 unidirectionally transmits differential signals corresponding to the audio data accompanying the image data, control packets, and other auxiliary data to the HDMI reception block 146 on a two or more channels.

The HDMI transmission block 129 has a source signal processing block 71 and an HDMI transmitter 72. The source signal processing block 71 is supplied with baseband (non-compressed) image (video) and audio data from the codec 125 (refer to FIG. 2). The source signal processing block 71 executes necessary processing on the supplied image and audio data and supplies the processed data to the HDMI transmitter 72. Also, the source signal processing block 71 transfers control information and status notification information (Control/Status) with the HDMI transmitter 72 as occasion demands.

The HDMI transmitter 72 converts the image data supplied from the source signal processing block 71 into a corresponding differential signal and unidirectionally transmits the differential signal to the connected HDMI reception block 146 via the HDMI cable 210 on three TMDS channels #0, #1, and #2.

Further, the HDMI transmitter 72 converts the audio data accompanying the non-compressed image data, control packets, and other auxiliary data, and control data such as a vertical sync signal (VSYNC) and a horizontal sync signal (HSYNC) into corresponding differential signals, unidirectionally transmitting the obtained differential signals to the HDMI reception block 146 connected via the HDMI cable 210 on the three TMDS channels #0, #1, and #2.

Also, the HDMI transmitter 72 transmits a pixel clock synchronized with the image data to be transmitted on the three TMDS channels #0, #1, and #2 to the HDMI reception block 146 connected via the HDMI cable 210 on a TMDS clock channel.

In the activity video period, the HDMI reception block 146 receives the differential signal corresponding to the image data unidirectionally transmitted from the HDMI transmission block 129 on two or more channels in the active video period and, at the same time, receives the differential signal corresponding to the auxiliary data and the control data transmitted from the HDMI transmission block 129 on two or more channels in the horizontal blanking and the vertical blanking.

The HDMI reception block 146 has an HDMI receiver 81 and a sync signal processing block 82. The HDMI receiver 81 receives the differential signal corresponding to the image data and the differential signal corresponding to the auxiliary data and control data unidirectionally transmitted from the HDMI transmission block 129 via the HDMI cable 210 on the three TMDS channels #0, #1, and #2, in synchronization with the pixel clock transmitted from the HDMI transmission block 129 on the TMDS clock channel. Further, the HDMI receiver 81 converts these differential signals into the corresponding image data, auxiliary data, and control data, supplying these items of data to the sync signal processing block 82 as occasion demands.

The sync signal processing block 82 executes necessary processing on the data supplied from the HDMI receiver 81 and supplies the processed data to the switch 149 and the HDMI transmission block 152 (refer to FIG. 3). In addition, the sync signal processing block 82 transfers control information and status notification information (Control/Status) with the HDMI receiver 81 as occasion demands.

HDMI channels include three TMDS channels #0, #1, and #2 for unidirectionally serial-transmitting image data, auxiliary data, and control data from the HDMI transmission block 129 to the HDMI reception block 146 in synchronization with a pixel clock, a TMDS clock channel that is a transmission channel for transmitting a pixel clock, and transmission channels called a DDC (Display Data Channel) 83 and a CEC line 84.

The DDC 83 is made up of two lines (signal lines), not shown, included in the HDMI cable 210 and is used for the DVD recorder 120 to read EDID information from the flash ROM 143 of the television receiver 140 connected via the HDMI cable 210. The DVD recorder 120 recognizes the setting and performance of the television receiver 140 on the basis of this EDID information.

The CEC line 84 is made up of one line, not shown, included in the HDMI cable 210 and is used for the bidirectional communication of control data between the DVD recorder 120 and the television receiver 140.

The HDMI cable 210 also includes a line 86 that is connected to a pin called an HPD (Hot Plug Detect). Using this line 86, the DVD recorder 120 can detect the connection of the television receiver 140. Also, the HDMI cable 210 includes a line 87 that is used to supply power from the DVD recorder 120 to the television receiver 140.

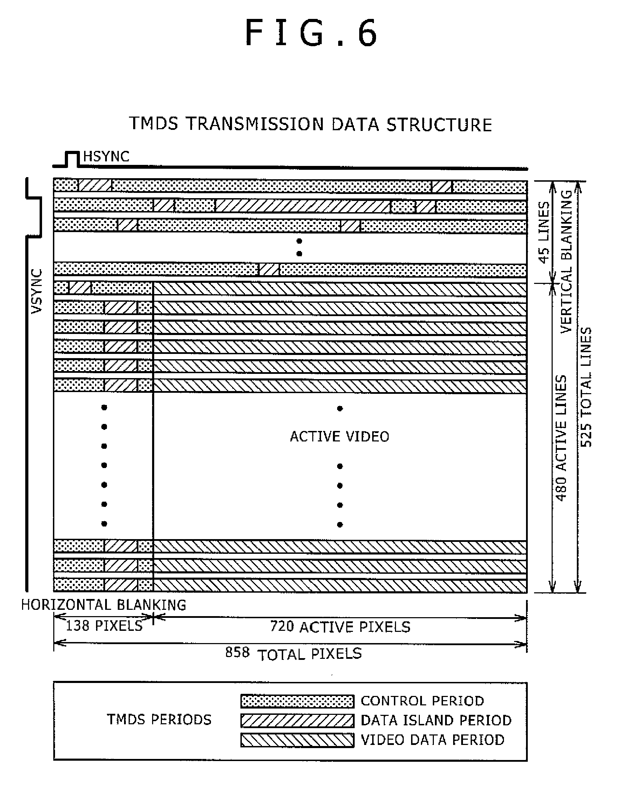

Referring to FIG. 6, there is shown an example of a transmission period (or a transmission interval) in which various kinds of transmission data are transmitted on three TMDS channels #0, #1, and #2 of HDMI. It should be noted that FIG. 6 shows periods of various kinds of data when a 720 (width) x 480 (height) progressive image is transmitted on the TMDS channels #0, #1, and #2.

A video field in which transmission data is transmitted on the three TMDS channels #0, #1, and #2 of HDMI has three kinds of periods, a video data period, a data island period, and a control period depending upon the type of transmission data.

The video field period is a period between the active edge of a vertical sync signal and the active edge of the next vertical sync signal and is divided into a horizontal blanking, a vertical blanking, and an active video that is a period minus the horizontal blanking and the vertical blanking.

The video data period is allocated to the active video. In the video data period, valid-pixel (active-pixel) data for 720 pixels x 480 lines making up the non-compressed image data for one screen.

The data island period and the control period are allocated to the horizontal blanking and the vertical blanking. In the data island period and the control period, auxiliary data is transmitted.

To be more specific, the data island period is allocated to a part of the horizontal blanking and the vertical blanking. In this data island period, audio data packets for example that are data not related with control, of the auxiliary data, are transmitted.

The control period is allocated to the other part of the horizontal blanking and the vertical blanking. In the control period, a vertical sync signal, a horizontal sync signal, and control packets, for example, that the data related with control, of the auxiliary data, are transmitted.

In the current HDMI, the frequency of the pixel clock to be transmitted on the TMDS clock channel is 165 MHz for example; in this case, the transfer rate of the data island period is about 500 Mbps.

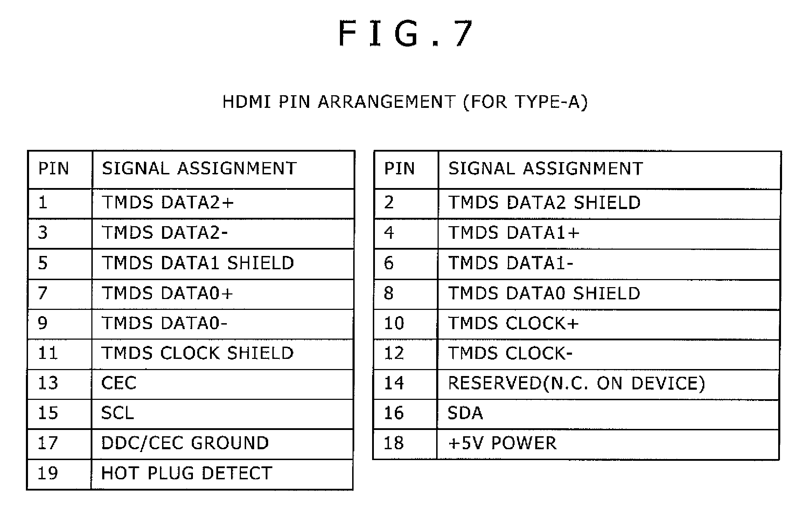

Referring to FIG. 7, there is shown a pin arrangement of the HDMI terminals 121, 141, 142, and 161. This pin arrangement is called type A.

Two lines that are differential lines for carrying TMDS Data #i+ and TMDS Data #i- that are differential signals of TMDS channel #i are connected to pins (pin numbers 1, 4, and 7) to which TMDS Data #i+ is allocated and pins (pin numbers 3, 6, 9) to which TMDS Data #i- is allocated.

The CEC line 84 along which a CED signal that is control data is carried is connected to a pin having pin number 13. A pin having pin number 14 is reserved. A line along which an SDA (Serial Data) signal, such as EDID information, is carried is connected to a pin having pin number 16. A line along which a SCL (Serial Clock) signal that is a clock signal for use in synchronization at the time of SDA signal transfer is carried is connected to a pin having pin number 15. The above-mentioned DDC 83 is made up of the line for carrying an SDA signal and the line for carrying an SCL signal.

As described above, a line 86 for a source device 100 to detect the connection with a sink device 120 is connected to a pin having pin number 19. Also, as described above, a line 87 for supplying power is connected to a pin having pin number 18.

It should be noted that the above description has been made by use of an exemplary configuration of the HDMI transmission block 129 (the HDMI source) of the DVD recorder 120 and the HDMI reception block 146 (HDMI sink) of the television receiver 140 in the AV system 100. Although detailed description is omitted, the HDMI transmission block 152 (the HDMI source) of the television receiver 140 and the HDMI reception block 165 (the HDMI sink) of the television receiver 160 in the AV system 100 are configured in the similar manner.

The following describes an exemplary operation at the time of the system configuration of the AV system 100 shown in FIG. 1.

First, the HDMI terminal 142 of the television receiver 140 and the HDMI terminal 161 of the television receiver 160 are interconnected by the HDMI cable 220. At this moment, power is supplied from the television receiver 140 to the television receiver 160 along the line 87 (refer to FIG. 5) of the HDMI cable 220. Consequently, the voltage of the 19-pin of the HDMI terminal 142 of the television receiver 140 rises and the voltage of the 19-pin of the HDMI terminal 142 of the television receiver 140 also rises.

The control block 144 of the television receiver 140 is monitoring the voltage of the 19-pin of the HDMI terminal 142; when this voltage goes high, the control block 144 can recognize the connection of the television receiver 160 to the television receiver 140 via the HDMI cable 220, thereby starting a predetermined operation.

By use of the DDC 83 of the HDMI cable 220, the control block 144 reads EDID information from the flash ROM 162 of the television receiver 160 to recognize the setting and performance of the television receiver 160. In this sense, the control block 144 configures an information capturing block. Also, the control block 144 compares a first resolution indicated by the information of the image-receivable resolution included in the EDID information read from the flash ROM 162 of the television receiver 160 with a second resolution indicated by the information of the image-receivable resolution included in the EDID information stored in the flash ROM 143.

If the first resolution is found to be lower than the second resolution, the control block 144 rewrites the information of the image-receivable resolution included in the EDID information stored in the flash ROM 143 so as to indicate the first resolution. In this sense, the control block 144 configures an information rewriting block. For example, if the first resolution is 480i, 480p and the second resolution is 480i, 480p, 1080i, 720p, 1080p, then the information of the image-receivable resolution stored in the flash ROM 143 is rewritten so as to indicate 480p. Consequently, the information of the image-receivable resolution stored in the flash ROM 143 is indicative of the lowest of the image-receivable resolutions of the television receivers 140 and 160. It should be noted that when the image-receivable resolution stored in the flash ROM 143 is rewritten, the connection switch 154 is temporarily turned on.

Next, the HDMI terminal 121 of the DVD recorder 120 and the HDMI terminal 141 of the television receiver 140 are interconnected by the HDMI cable 210. AT this moment, power is supplied from the DVD recorder 120 to the television receiver 140 via the line 87 (refer to FIG. 5) of the HDMI cable 210. Consequently, the voltage of the 19-pin of the HDMI terminal 141 rises and the voltage of the 19-pin of the HDMI terminal 121 of the screen 102 also rises.

The control block 122 of the DVD recorder 120 is monitoring the voltage of the 19-pin of the HDMI terminal 121; when this voltage goes high, the control block 122 can recognize the connection of the television receiver 140 to the DVD recorder 120 via the HDMI cable 210, thereby starting a predetermined operation.

By use of the DDC 83 of the HDMI cable 210, the control block 122 reads the EDID information from the flash ROM 143 of the television receiver 140 to recognize the setting and performance of the television receiver 140. As described above, the resolution indicated by the image-receivable resolution stored in the flash ROM 143 of the television receiver 140 is set to the lowest of the image-receivable resolutions of the television receivers 140 and 160. Therefore, by analyzing the EDID information read from the flash ROM 143 of the television receiver 140, the control block 122 of the DVD recorder 120 recognizes the lowest of the image-receivable resolutions of the television receivers 140 and 160.

It should be noted that the above-mentioned operation is the connection of the television receiver 140 to the DVD recorder 120 via the HDMI cable 210 after the connection of the television receiver 160 to the television receiver 140 via the HDMI cable 220.

Conversely, the television receiver 160 may be connected to the television receiver 140 via HDMI cable 220 after the connection of the television receiver 140 to the DVD recorder 120 via the HDMI cable 210. In this case, when the television receiver 140 is connected to the DVD recorder 120 via the HDMI cable 210, the control block 122 of the DVD recorder 120 reads EDID information from the flash ROM 143 of the television receiver 140 by using the DDC 83 of the HDMI cable 210.

Further, if the television receiver 160 is connected to the television receiver 140 via the HDMI cable 220 to rewrite the information of the image-receivable resolution stored in the flash ROM 143 of the television receiver 140, the connection switch 154 is temporarily turned on, upon which the voltage of the 19-pin of the HDMI terminal 141 temporarily lowers. Hence, the control block 122 of the DVD recorder 120 recognizes the disconnection and reconnection of the television receiver 140, thereby rereading EDID information from the flash ROM 143 of the television receiver 140 by using the DDC 83 of the HDMI cable 210.

Therefore, if the television receiver 160 is connected to the television receiver 140 via the HDMI cable 220 after the connection of the television receiver 140 to the DVD recorder 120 via the HDMI cable 210, the control block 122 of the DVD recorder 120 can also recognize the lowest of the image-receivable resolutions of the television receivers 140 and 160 by analyzing the EDID information read from the flash ROM 143 of the television receiver 140.

The following describes an exemplary operation to be executed after the system configuration of the AV system 100 shown in FIG. 1.

For example, when the user operates the DVD recorder 120 so as to record data supplied from an external device with the terminal 126 of the DVD recorder 120 (refer to FIG. 2) connected to the external device, the codec 125 encodes the image and audio data supplied from the external device and the encoded data is recorded to the DVD 128 by the recording/reproducing block 127.

When the user operates the DVD recorder 120 so as to transmit data recorded to the DVD 128, the recording/reproducing block 127 reproduces the encoded data from the DVD 128 and the reproduced data is supplied to the codec 125. The codec 125 decodes the encoded data reproduced by the recording/reproducing block 127 into baseband image and audio data, the decoded data being supplied to the HDMI transmission block 129.

In the HDMI transmission block 129, the resolution of the image data supplied from the codec 125 is indicative of the lowest of the image-receivable resolutions of the television receivers 140 and 160 recognized by the control block 122 of the DVD recorder 120 as described above. For example, if the image-receivable resolution of the television receiver 160 is 480i, 480p and the image-receivable resolution of the television receiver 140 is 480i, 480p, 1080i, 720p, 1080p, then the HDMI transmission block 129 executes processing of setting the resolution of the image data supplied from the codec 125 to 480p.

Next, the HDMI transmission block 129 unidirectionally transmits the image data with the resolution thereof indicative of the lowest of the image-receivable resolutions of the television receivers 140 and 160 and the baseband audio data supplied from the codec 125 to the television receiver 140 via the HDMI cable 210 on the basis of the HDMI-compliant communication.

In the television receiver 140 (refer to FIG. 3), the HDMI reception block 146 receives the baseband image and audio data unidirectionally transmitted from the HDMI transmission block 129 of the DVD recorder 120 via the HDMI cable 210 on the basis of HDMI-compliant communication. The image data received by the HDMI reception block 146 is supplied to the switch 149 and the audio data received by the HDMI reception block 146 is supplied to a switch for audio data, not shown.

The image data received by the tuner 147 is supplied to the switch 149. The audio data received by the tuner 147 is also supplied to the switch for audio data, not shown. When the user operates the user operation block 145 so as to select the HDMI reception block 146, the image data received by the HDMI reception block 146 is taken out in the switch 149. Since the resolution of this image data is included in the image-receivable resolution of the television receiver 140, the image can be received by the television receiver 140. On the other hand, when the user operates the user operation block 145 so as to select the tuner 147, the switch 149 takes out the image data received by the tuner 147. It should be noted that, in the switch for audio data, not shown, the audio data corresponding to the image data taken out by the switch 149 is taken out.

The image data taken out by the switch 149 is supplied to the display processing block 150. Under the control of the control block 144, the display processing block 150 executes color adjustment, edge enhancement, and graphics data superimposition, for example, on the image data. In addition, the display processing block 150 executes scaling as occasion demands. For example, in the switch 149, the image data received by the HDMI reception block 146 is taken out. The resolution of this image data is 480p. If the image-receivable resolution of the television receiver 140 includes 1080p, the display processing block 150 executes zoom-in scaling on the basis of an image zoom-in command given by the user. Then, the image based on the image data supplied from the display processing block 150 is displayed on the display panel 151.

It should be noted that the audio data taken out by the switch for audio data is converted into an analog signal that is supplied to a loudspeaker, not shown, to be sounded in correspondence with the image displayed on the display panel 151.

The baseband image and audio data received by the HDMI reception block 146 are supplied to the HDMI transmission block 152. By HDMI-compliant communication, the HDMI transmission block 152 unidirectionally transmits the baseband image and audio data to the television receiver 160 via the HDMI cable 220.

In the television receiver 160 (refer to FIG. 4), the HDMI reception block 165 receives the baseband image and audio data unidirectionally transmitted from the HDMI transmission block 152 of the television receiver 140 via the HDMI cable 220 on the basis of HDMI-compliant communication. The image data received by the HDMI reception block 165 is supplied to the switch 168, while the audio data received by the HDMI reception block 165 is supplied to the switch for audio data, not shown.

The image data received by the tuner 166 is supplied to the switch 168. The audio data received by the tuner 166 is supplied to the switch for audio data, not shown. When the user operates the user operation block 164 so as to select the HDMI reception block 165, the switch 168 takes out the image data received by the HDMI reception block 165. Since the resolution of this image data is equal to or lower than the image-receivable resolution of the television receiver 160, the television receiver 160 can receive the image. On the other hand, when the user operates the user operation block 164 so as to select the tuner 166, the switch 168 takes out the image data received by the tuner 166. It should be noted that the switch for audio data, not shown, takes out the audio data corresponding to the image data taken out by the switch 168.

The image data taken out by the switch 168 is supplied to the display processing block 169. Under the control of the control block 163, the display processing block 169 executes color adjustment, edge enhancement, and graphics data superimposition, for example, on the image data. In addition, the display processing block 169 executes scaling as occasion demands as with the above-mentioned display processing block 150 of the television receiver 140.

The image based on the image data supplied from the display processing block 169 is displayed on the display panel 170. It should be noted that the audio data taken out by the switch for audio data is converted into an analog signal that is supplied to a loudspeaker, not shown, to be sounded in correspondence with the image displayed on the display panel 170.

As described above, in the AV system 100 shown in FIG. 1, the information of the image-receivable resolution in the flash ROM 143 of the television receiver 140 is rewritten to the lowest of the image-receivable resolutions of the television receivers 140 and 160 at the time of system configuration. Next, the control block 122 of the DVD recorder 120 can recognize the lowest of the image-receivable resolutions of the television receivers 140 and 160 by analyzing the EDID information read from the flash ROM 143 of the television receiver 140.

Consequently, in the AV system 100 shown in FIG. 1, the resolution of the image data to be transmitted from the DVD recorder 120 to the television receivers 140 and 160 after system configuration is indicative of the resolution recognized by the control block 122 as described above, namely, the lowest of the resolutions of the television receivers 140 and 160. Therefore, in any of the television receivers 140 and 160, the image reception based on the image data supplied from the DVD recorder 120 is enabled.

In the television receiver 140 of the AV system 100 shown in FIG. 1, the image-receivable resolution of the television receiver 140 is lower than the image-receivable resolution of the television receiver 160 and, when the information of the image-receivable resolution stored in the flash ROM 143 is rewritten to indicate the image-receivable resolution of the television receiver 160 at the time of system configuration, the connection switch 154 is temporarily turned on.

Consequently, if the television receiver 160 is connected to the television receiver 140 via the HDMI cable 220 after the connection of the television receiver 140 to the DVD recorder 120 via the HDMI cable 210 and when the information of the image-receivable resolution stored in the flash ROM 143 of the television receiver 140 is rewritten, the voltage of the 19-pin of the HDMI terminal 141 temporarily lowers, so that the control block 122 of the DVD recorder 120 recognizes the disconnection and reconnection of the television receiver 140, thereby reading EDID information from the flash ROM 143 of the television receiver 140 again.

Therefore, even when the television receiver 160 is connected to the television receiver 140 via the HDMI cable 220 after the connection of the television receiver 140 to the DVD recorder 120 via the HDMI cable 210, the control block 122 of the DVD recorder 120 can recognize the lowest of the image-receivable resolutions of the television receivers 140 and 160 by analyzing the EDID information read from the flash ROM 143 of the television receiver 140.

It should be noted that, as described above, the information of the image-receivable resolution stored in the flash ROM 143 of the television receiver 140 is rewritten when the image-receivable resolution of the television receiver 160 is lower than the image-receivable resolution of the television receiver 140 at the time of system configuration. In this case, when the system is cleared by disconnecting the television receiver 160 from the television receiver 140, the information of the image-receivable resolution stored in the flash ROM 143 is restored to the original state indicative of the image-receivable resolution of the television receiver 140.

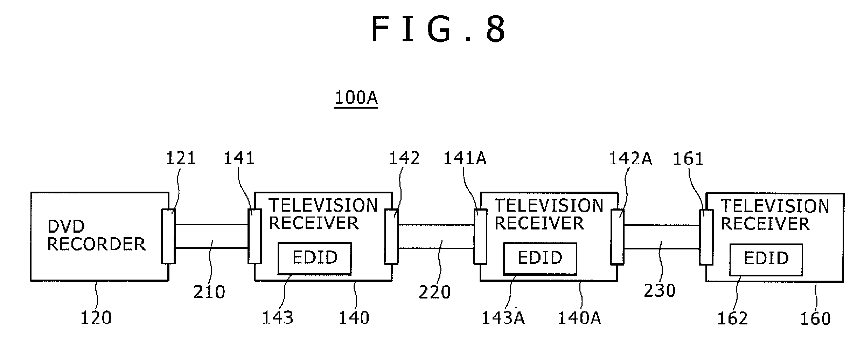

The following describes another embodiment of the invention. FIG. 8 shows an exemplary configuration of an AV system 100A practiced as another embodiment of the invention. With reference to FIG. 8, components similar to those previously described with reference to FIG. 1 are denoted by the same reference numerals and detailed description thereof will be appropriated skipped.

The AV system 100A has a DVD recorder 120, a television receiver 140, a television receiver 140A, and a television receiver 160. The DVD recorder 120 makes up a source device of HDMI. The television receiver 140 and the television receiver 140A have a repeater capability and make up repeater devices of HDMI. The television receiver 160 makes up a sink device. The AV system 100A has a configuration in which the television receiver 140A is arranged between the television receiver 140 and the television receiver 160 of the AV system 100 shown in FIG. 1.

The DVD recorder 120 and the television receiver 140 are interconnected by an HDMI cable 210. Namely, one end of the HDMI cable 210 is connected to an HDMI terminal 121 of the DVD recorder 120 and the other end is connected to an HDMI terminal 141 of the television receiver 140.

The television receiver 140 and the television receiver 140A are interconnected by an HDMI cable 220. Namely, one end of the HDMI cable 220 is connected to an HDMI terminal 142 on the output side of the television receiver 140 and the other end is connected to an HDMI terminal 141A on the input side of the television receiver 140A.

The television receiver 140A and the television receiver 160 are interconnected by an HDMI cable 230. Namely, one end of the HDMI cable 230 is connected to an HDMI terminal 142A on the output side of the television receiver 140A and the other end is connected to the HDMI terminal 161 of the television receiver 160.

The television receivers 140, 140A, and 160 have the flash ROMs 143, 143A, and 162, respectively, as the storage block. These flash ROMs 143, 143A, and 162 each store EDID information and so on. The EDID information includes the information of the image-receivable resolutions of the television receivers 140, 140A, and 160.

The DVD recorder 120, the television receiver 140, and the television receiver 160 have substantially the same configurations as those of the DVD recorder 120, the television receiver 140, and the television receiver 160 of the AV system 100 shown in FIG. 1 (refer to FIGS. 2, 3, and 4). The television receiver 140A has substantially the same configuration as that of the television receiver 140, details thereof being skipped for brevity.

In the AV system 100A shown in FIG. 8, at the time of system configuration, the television receiver 160 operates in substantially the same manner as the above-mentioned television receiver 160 of the AV system 100 shown in FIG. 1. The television receiver 140 and the television receiver 140A operate in substantially the same manner as the above-mentioned television receiver 140 of the AV system 100 shown in FIG. 1.

Consequently, the information of the image-receivable resolution stored in the flash ROM 143 of the television receiver 140 indicates the lowest of the image-receivable resolutions of the television receivers 140, 140A, and 160. Then, as with the AV system 100 shown in FIG. 1, the control block 122 of the DVD recorder 120 analyzes the EDID information read from the flash ROM 143 of the television receiver 140 to recognize the lowest of the image-receivable resolutions of the television receivers 140, 140A, and 160.

Therefore, in the AV system 100A shown in FIG. 8, after system configuration, the resolution of the image data to be transmitted from the DVD recorder 120 to the television receivers 140, 140A, and 160 is indicative of the resolution recognized by the control block 122 as described above, namely, the lowest of the image-receivable resolutions of the television receivers 140, 140A, and 160. Hence, with any of the television receivers 140, 140A, and 160, the image reception based on the image data transmitted from the DVD recorder 120 is enabled.

It should be noted that, in the AV system 100A shown in FIG. 8, the two television receivers 140 and 140A each having a repeater capability are arranged between the AV system 100 and the television receiver 160 in series; it is also practicable to configure an AV system in which three or more like televisions are arranged between the AV system 100 and the television receiver 160.

In the AV system 100 shown in FIG. 1 and the AV system 100A shown in FIG. 8, if the image-receivable resolution of a succeeding television receiver is lower than the image-receivable resolution of the television receiver 140 or the television receiver 140A, the image-receivable resolutions stored in the flash ROMs of the television receivers 140 and 140A are rewritten to match with the image-receivable resolution of the succeeding television receiver. However, it is also practicable that, regardless of the own image-receivable resolution, the information of the image-receivable resolution stored in the flash ROM of each of the television receiver 140 and the television receiver 140A may be rewritten so as to match with the image-receivable resolution of a succeeding television receiver.

In this case, in the AV system 100 shown in FIG. 1 and the AV system 100A shown in FIG. 8, at the time of system configuration, the information of the image-receivable resolution stored in the flash ROM 143 of the television receiver 140 is indicative of the image-receivable resolution of the television receiver 160 that is connected at the end. Then, the control block 122 of the DVD recorder 120 recognizes the image-receivable resolution of the television receiver 160 by analyzing the EDID information read from the flash ROM 143 of the television receiver 140.

Therefore, in this case, after the system configuration, the resolution of the image data transmitted from the DVD recorder 120 to a succeeding stage is matched with the resolution recognized by the control block 122 as described above, namely, the image-receivable resolution of the television receiver 160. Hence, at least the television receiver 160 can provide a good image reception based on the image data transmitted from the DVD recorder 120.

It should be noted that, in the above-mentioned case, if the image-receivable resolutions of the television receiver 140 and the television receiver 140A are equal to or higher than the image-receivable resolution of the television receiver 160, image reception is enabled on the television receiver 140 and the television receiver 140A.

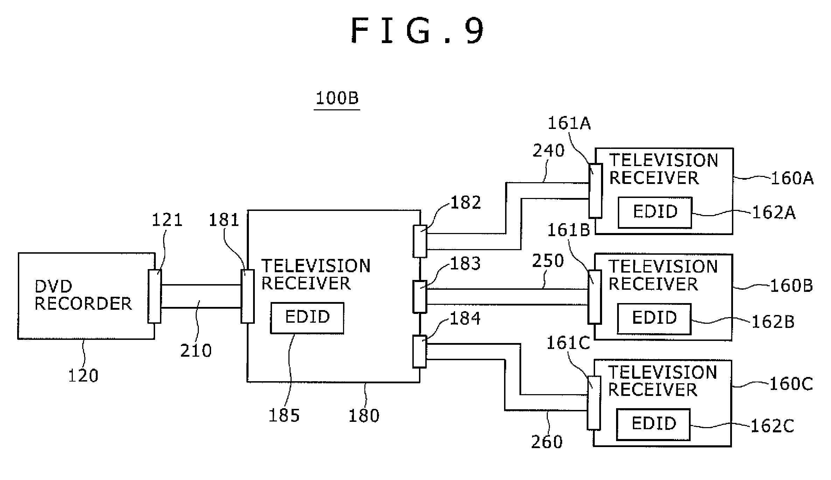

The following describes still another embodiment of the invention. Referring to FIG. 9, there is shown an exemplary configuration of an AV (Audio/Visual) system 100B practiced as still another embodiment of the invention. With reference to FIG. 9, components similar to those previously described with reference to FIG. 1 are denoted by the same reference numerals and detailed description thereof will be skipped.

The AV system 100B has a DVD recorder 120, a television receiver 180, and television receivers 160A through 160C. The DVD recorder 120 makes up an HDMI source device. The television receiver 180 has a repeater capability and makes up an HDMI repeater device. The television receivers 160A through 160C make up HDMI sink devices.

The DVD recorder 120 and the television receiver 180 are interconnected by an HDMI cable 210. Namely, one end of the HDMI cable 210 is connected to an HDMI terminal 121 of the DVD recorder 120 and the other end is connected to an HDMI terminal 181 on the input side of the television receiver 180.

The television receiver 180 and the television receivers 160A through 160C are interconnected by HDMI cables 240 through 260. Namely, one end of the HDMI cable 240 is connected to a first HDMI terminal 182 on the output side of the television receiver 180 and the other end is connected to an HDMI terminal 161A of the television receiver 160A. One end of the HDMI cable 250 is connected to a second HDMI terminal 183 on the output side of the television receiver 180 and the other end is connected to an HDMI terminal 161B of the television receiver 160B. One end of the HDMI cable 260 is connected to a third HDMI terminal 184 on the output side of the television receiver 180 and the other end is connected to an HDMI terminal 161C of the television receiver 160C.

The television receiver 180 has a flash ROM 185 as a storage block. The flash ROM 185 stores EDID information and so on. The EDID information includes the information of the image-receivable resolution of the television receiver 180. Likewise, the television receivers 160A through 160C have flash ROMs 162A through 162C, respectively. These flash ROMs store EDID information and so on. The EDID information includes the information of image-receivable resolutions of the television receivers 160A through 160C.

The DVD recorder 120 has substantially the same configuration as the DVD recorder 120 in the AV system 100 shown in FIG. 1 (refer to FIG. 2). Although detailed description is omitted, the television receivers 160A through the 160C each have substantially the same configuration as the television receiver 160 in the AV system 100 shown in FIG. 1 (refer to FIG. 4).

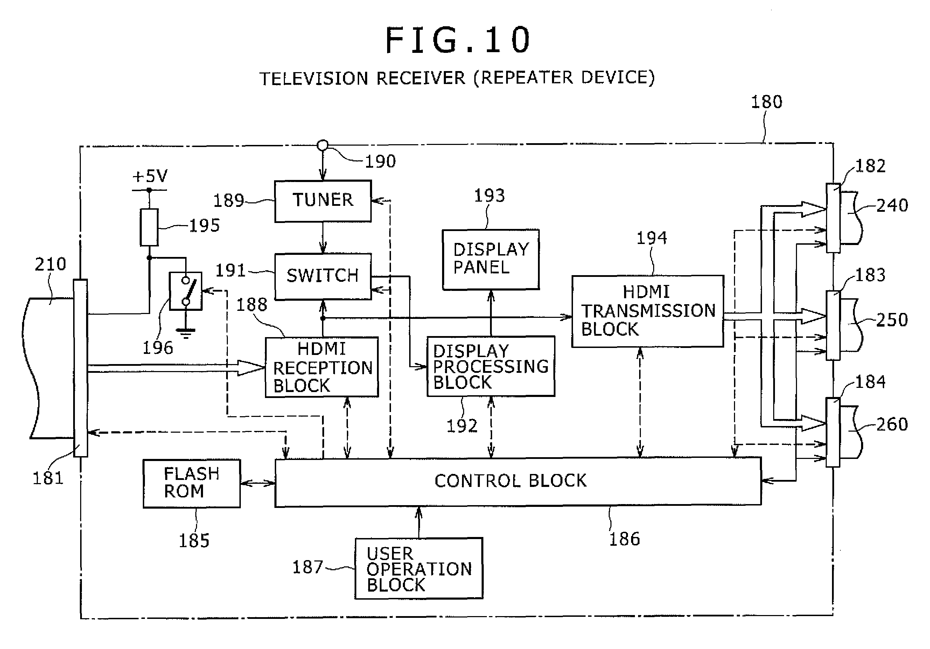

Referring to FIG. 10, there is shown an exemplary configuration of the television receiver 180. The television receiver 180 has the HDMI terminals 181 through 184, the flash ROM 185, a control block 186, a user operation block 187, an HDMI reception block (an HDMI sink) 188, a tuner 189, an antenna terminal 190, a switch 191, a display processing block 192, a display panel 193, an HDMI transmission block (an HDMI source) 194, a pullup resistor 195, and a connection switch 196.

The control block 186 controls the operation of each component of the television receiver 180. The user operation block 187 makes up a user interface and is connected to the control block 186. The user operation block 187 is composed of keys, buttons, and dials arranged on a housing, not shown, of the television receiver 180 and a remote controller, for example. The flash ROM 185 stores EDID information containing the information of image-receivable resolution of the television receiver 180 as described above and is connected to the control block 186.

The HDMI reception block 188 is connected to the HDMI terminal 181. By HDMI-compliant communication, the HDMI reception block 188 receives baseband image data and audio data unidirectionally transmitted from the HDMI transmission block 129 (refer to FIG. 1) of the DVD recorder 120 connected via the HDMI cable 210. The HDMI reception block 188 supplies the received image data to the switch 191. It should be noted that the audio data received by the HDMI reception block 188 is supplied to a switch for audio data. The HDMI reception block 188 makes up a signal reception block. Although detailed description is omitted, the HDMI reception block 188 has substantially the same configuration as the above-mentioned HDMI reception block 146 (refer to FIG. 5) of the television receiver 140.

The tuner 189 receives BS broadcasting, digital terrestrial broadcasting, and so on, for example. The tuner 189 is supplied with broadcast signals caught by an antenna, not shown, connected to the antenna terminal 190. The tuner 189 gets image data (a video signal) and audio data of a predetermined broadcast program. The tuner 189 makes up a broadcast reception block. The switch 191 selectively takes out the image data received by the HDMI reception block 188 or the image data obtained by the tuner 189.

The display processing block 192 executes color adjustment, edge enhancement, or graphics data superimposition onto the image data taken out by the switch 191. The display panel 193 displays the image based on the image data processed by the display processing block 192. The display panel 193 is composed of an LCD device, an organic EL device, or a PDP device, for example.

The HDMI transmission block 194 is connected to the HDMI terminals 182 through 184. By the HDMI-compliant communication, the HDMI transmission block 194 unidirectionally transmits baseband image and audio data received by the HDMI reception block 188 to the television receivers 160A through 160C from the HDMI terminals 182 through 184 via the HDMI cables 240 through 260, respectively. The HDMI transmission block 194 makes up a signal transmission block. Although detailed description is omitted, the HDMI transmission block 194 has substantially the same configuration as the above-mentioned HDMI transmission block 129 (refer to FIG. 5) of the DVD recorder 120.

A 19-pin of the HDMI terminal 181 provides an HPD terminal (refer to FIG 7). The 19-pin of the HDMI terminal 181 is connected to a +5V power supply via the pullup resistor 195. When the television receiver 180 is connected to the DVD recorder 120 via the HDMI cable 210, power is supplied from the DVD recorder 120, thereby raising the voltage of the 19-pin of the HDMI terminal 181. The control block 122 (refer to FIG. 2) of the DVD recorder 120 is monitoring the voltage of the 19-pin of the HDMI terminal 121. When the voltage of the 19-pin goes high, the control block 122 confirms the connection of the television receiver 180. The pullup resistor 195 makes up a signal generator block configured to generate a signal indicative of the connection, this signal being supplied to the DVD recorder 120.

The pin-19 of the HDMI terminal 181 is also grounded via the connection switch 196. Under the control of the control block 186, the connection switch 196 is temporarily turned on when the information of the image-receivable resolution included in the EDID information stored in the flash ROM 185 is rewritten as will be described later. As described above, when the television receiver 180 is connected to the DVD recorder 120 via the HDMI cable 210, the voltage of the 19-pin of the HDMI terminal 181 rises to enter a state in which a signal indicative of connection is generated. However, when the connection switch 196 is turned on, the voltage of the 19-pin of the HDMI terminal 181 lowers to temporarily stop the generation of the connection indicative signal.

The following describes an exemplary operation to be executed at the time of system configuration of the AV system 100B shown in FIG. 9.

First, the HDMI terminals 182 through 184 of the television receiver 180 are connected to the HDMI terminals 161A through 161C of the television receivers 160A through 160C, respectively, by the HDMI cables 240 through the 260, respectively. At this moment, through a line 87 (refer to FIG. 5) of the HDMI cables 240 through 260, power is supplied from the television receiver 180 to the television receivers 160A through 161C. Therefore, the voltage of the 19-pin in the HDMI terminals 161A through 161C of the television receivers 160A through 160C, respectively, rises and the 19-pin in the HDMI terminals 182 through 184 of the television receiver 180 also rises.

The control block 186 of the television receiver 180 is monitoring the voltage of the 19-pin in the HDMI terminals 182 through 184. When this voltage rises, the control block 186 can recognize the connection of the television receivers 160A through 160C to the television receiver 180 via the HDMI cables 240 through 260, thereby starting a predetermined operation.

By use of a DDC 83 of the HDMI cables 240 through 260, the control block 186 reads EDID information from the flash ROMs 162A through 162C of the television receivers 160A through 160C, respectively, to recognize the setting and performance of each of the television receivers 160A through 160C. In this sense, the control block 186 makes up an information capturing block. Also, as described above, the control block 186 rewrites the information of the image-receivable resolution stored in the flash ROM 185 in any one of first, second, and third modes below on the basis of the information of the image-receivable resolution included in the EDID information read from the flash ROMs 162A through 162C of the television receivers 160A through 160C, respectively. In this sense, the control block 186 makes up an information rewriting block. Selection of one of the three modes can be set through the user operation block 187 by the user, for example.

### (a) The first mode

Of the resolutions indicated by the information of the image-receivable resolutions stored in the flash ROMs 162A through 162C, the control block 186 rewrites the information of the image-receivable resolutions stored in the flash ROM 185 so as to indicate the lowest resolution. For example, if the image-receivable resolution of the television receiver 160A indicated by the information of the image-receivable resolution stored in the flash ROM 162A is 480i, 480p, the image-receivable resolution of the television receiver 160B indicated by the information of the image-receivable resolution stored in the flash ROM 162B is 480i, 480p, 1080i, and the image-receivable resolution of the television receiver 160C indicated by the information of the image-receivable resolution stored in the flash ROM 162C is 480i, 480p, 1080i, 720p, then the information of the image-receivable resolution of the flash ROM 185 is rewritten so as to indicate resolution 480p.

### (b) The second mode

Of the resolutions indicated by the information of the image-receivable resolutions stored in the flash ROMs 162A through 162C, the control block 186 rewrites the information of the image-receivable resolutions stored in the flash ROM 185 so as to indicate the highest resolution. For example, if the image-receivable resolution of the television receiver 160A indicated by the information of the image-receivable resolution stored in the flash ROM 162A is 480i, 480p, the image-receivable resolution of the television receiver 160B indicated by the information of the image-receivable resolution stored in the flash ROM 162B is 480i, 480p, 1080i, and the image-receivable resolution of the television receiver 160C indicated by the information of the image-receivable resolution stored in the flash ROM 162C is 480i, 480p, 1080i, 720p, then the information of the image-receivable resolution of the flash ROM 185 is rewritten so as to indicate resolution 720p.

### (c) The third mode

Of the resolutions indicated by the information of the image-receivable resolutions stored in the flash ROMs 162A through 162C, the control block 186 rewrites the information of the image-receivable resolutions stored in the flash ROM 185 so as to indicate an intermediate resolution between the lowest and highest resolutions. For example, if the image-receivable resolution of the television receiver 160A indicated by the information of the image-receivable resolution stored in the flash ROM 162A is 480i, 480p, the image-receivable resolution of the television receiver 160B indicated by the information of the image-receivable resolution stored in the flash ROM 162B is 480i, 480p, 1080i, and the image-receivable resolution of the television receiver 160C indicated by the information of the image-receivable resolution stored in the flash ROM 162C is 480i, 480p, 1080i, 720p, then the information of the image-receivable resolution of the flash ROM 185 is rewritten so as to indicate resolution 480p. It should be noted that, when the image-receivable resolution stored in the flash ROM 185 is rewritten, the pullup resistor 195 is temporarily turned on.

Next, the HDMI terminal 121 of the DVD recorder 120 and the HDMI terminal 181 of the television receiver 180 are interconnected by the HDMI cable 210. At this moment, through the line 87 (refer to FIG. 5) of the HDMI cable 210, power is supplied from the DVD recorder 120 to the television receiver 180. Hence, the voltage of 19-pin of the HDMI terminal 181 of the television receiver 180 rises and the 19-pin of the HDMI terminal 121 of the DVD recorder 120 also rises.

The control block 122 of the DVD recorder 120 is monitoring the voltage of the 19-pin of the HDMI terminal 121. When this voltage rises, the control block 122 can recognize the connection of the television receiver 180 to the DVD recorder 120 via the HDMI cable 210, thereby starting a predetermined operation.

By use of the DDC 83 of the HDMI cable 210, the control block 122 reads the EDID information from the flash ROM 185 of the television receiver 180 to recognize the setting and performance of the television receiver 180. As described above, the resolution indicated by the image-receivable resolution stored in the flash ROM 185 of the television receiver 180 has been rewritten to one of the first, second, and third modes on the basis of image-receivable resolutions of the television receivers 160A through 160C connected in series to the television receiver 180.

Therefore, by analyzing the EDID information read from the flash ROM 185 of the television receiver 180, the control block 122 of the DVD recorder 120 recognizes the lowest image-receivable resolution (the first mode), the highest image-receivable resolution (the second mode), and the intermediate image-receivable resolution (the third mode) of the television receivers 160A through 160C, respectively.

It should be noted that, the above-mentioned operation is the connection of the television receiver 180 to the DVD recorder 120 via the HDMI cable 210 after the connection of the television receivers 160A through 160C to the television receiver 180 via the HDMI cables 240 through 260, respectively.

However, conversely, the television receivers 160A through 160C may be connected to the television receiver 180 via the HDMI cables 240 through 260, respectively, after the connection of the television receiver 180 to the DVD recorder 120 via the HDMI cable 210. In this case, when the television receiver 180 is connected to the DVD recorder 120 via the HDMI cable 210, the control block 122 of the DVD recorder 120 reads EDID information from the flash ROM 185 of the television receiver 180 by use of the DDC 83 of the HDMI cable 210.

Further, if the television receivers 160A through the 160C are connected to the television receiver 180 via the HDMI cables 240 through 260, respectively and the information of the image-receivable resolution stored in the flash ROM 185 of the television receiver 180 is rewritten, the connection switch 196 is temporarily turned on to temporarily lower the voltage of the 19-pin of the HDMI terminal 181. Consequently, the control block 122 of the DVD recorder 120 recognizes the disconnection and reconnection of the television receiver 180 and rereads EDID information from the flash ROM 185 of the television receiver 180 by use of the DDC 83 of the HDMI cable 210.

Consequently, if the television receivers 160A through 160C are connected to the television receiver 180 via the HDMI cables 240 through 260, respectively, after the connection of the television receiver 180 to the DVD recorder 120 via the HDMI cable 210, the control block 122 of the DVD recorder 120 recognizes the lowest image-receivable resolution (the first mode), the highest image-receivable resolution (the second mode), or the intermediate image-receivable resolution (the third mode) of the television receivers 160A through 160C by analyzing the EDID information read from the flash ROM 185 of the television receiver 180.

The following describes an exemplary operation to be executed after the system configuration of the AV system 100B shown in FIG. 9.

For example, if the user operates the DVD recorder 120 so as to record data from an external device in a state where the terminal 126 of the DVD recorder 120 (refer to FIG. 2) is connected to the external device, then the image and audio data from the external device is encoded by the codec 125 to be recorded to a DVD 128 by a recording/reproducing block 127.

If the user operates the DVD recorder 120 so as to transmit data from the DVD 128, then the recording/reproducing block 127 reproduces the encoded data from the DVD 128 to be supplied to the codec 125. The codec 125 decodes the encoded data reproduced by the recording/reproducing block 127 into the baseband image and audio data that is supplied to the HDMI transmission block 129.

In the HDMI transmission block 129, the resolution of the image data supplied from the codec 125 is matched with the lowest image-receivable resolution (the first mode), the highest image-receivable resolution (the second mode), or the intermediate image-receivable resolution (the third mode) of the television receivers 160A through 160C recognized by the control block 122 of the DVD recorder 120 as described above.

Next, by HDMI-compliant communication, the HDMI transmission block 129 unidirectionally transmits the image data matched with the lowest image-receivable resolution (the first mode), the highest image-receivable resolution (the second mode), or the intermediate image-receivable resolution (the third mode) of the television receivers 160A through 160C and the baseband audio data supplied from the codec 125 to the television receiver 180 via the HDMI cable 210.

In the television receiver 180 (refer to FIG. 10), by HDMI-compliant communication, the HDMI reception block 188 receives the baseband image and audio data unidirectionally transmitted from the HDMI transmission block 129 of the DVD recorder 120 via the HDMI cable 210. The image data received by the HDMI reception block 188 is supplied to the switch 191 and the audio data received by the HDMI reception block 188 is supplied to a switch for audio data, not shown.

The image data received by the tuner 189 is supplied to the switch 191. The audio data received by the tuner 189 is supplied to the switch for audio data, not shown. When the user operates the user operation block 187 to select the HDMI reception block 188, the image data received by the HDMI reception block 188 is taken out by the switch 191. If the resolution of the taken out image data is included in the image-receivable resolution of the television receiver 180, the image reception is enabled on this television receiver 180. On the other hand, when the user operates the user operation block 187 to select the tuner 189, the image data received by the tuner 189 is taken out by the switch 191. It should be noted that the switch for audio data, not shown, takes out the audio data corresponding to the image data taken out by the switch 191.

The image data taken out by the switch 191 is supplied to the display processing block 192. Under the control of the control block 186, the display processing block 192 executes color adjustment, edge enhancement, and graphics data superimposition, for example, on the image data. In addition, the display processing block 192 executes scaling as occasion demands. For example, in the switch 191, the image data received by the HDMI reception block 188 is taken out. The resolution of this image data is 480p. If the image-receivable resolution of the television receiver 140 includes a resolution higher than 480p, the display processing block 192 executes zoom-in scaling on the basis of an image zoom-in command given by the user. Then, the image based on the image data supplied from the display processing block 192 is displayed on the display panel 193.

It should be noted that the audio data taken out by the switch for audio data is converted into an analog signal that is supplied to a loudspeaker, not shown, to be sounded in correspondence with the image displayed on the display panel 193.

The baseband image and audio data received by the HDMI reception block 188 are supplied to the HDMI transmission block 194. By HDMI-compliant communication, the HDMI transmission block 194 unidirectionally transmits the baseband image and audio data to the television receivers 160A through 160C via the HDMI cables 240 through 260, respectively.

In the television receivers 160A through 160C (refer to FIG. 4), the HDMI reception block 165 receives the baseband image and audio data unidirectionally transmitted from the HDMI transmission block 194 of the television receiver 180 via the HDMI cables 240 through 260, respectively, on the basis of HDMI-compliant communication. The image data received by the HDMI reception block 165 is supplied to the switch 168, while the audio data received by the HDMI reception block 165 is supplied to the switch for audio data, not shown.

The image data received by the tuner 166 is supplied to the switch 168. The audio data received by the tuner 166 is supplied to the switch for audio data, not shown. When the user operates the user operation block 164 so as to select the HDMI reception block 165, the switch 168 takes out the image data received by the HDMI reception block 165. If the resolution of this image data is included in the image-receivable resolutions of the television receivers 160A through 160C, image reception is enabled on these television receivers 160A through 160C. On the other hand, when the user operates the user operation block 164 so as to select the tuner 166, the switch 168 takes out the image data received by the tuner 166. It should be noted that the switch for audio data, not shown, takes out the audio data corresponding to the image data taken out by the switch 168.

The image data taken out by the switch 168 is supplied to the display processing block 169. Under the control of the control block 163, the display processing block 169 executes color adjustment, edge enhancement, and graphics data superimposition, for example, on the image data. In addition, the display processing block 169 executes scaling as occasion demands as with the above-mentioned display processing block 192 of the television receiver 180.

The image based on the image data supplied from the display processing block 169 is displayed on the display panel 170. It should be noted that the audio data taken out by the switch for audio data is converted into an analog signal that is supplied to a loudspeaker, not shown, to be sounded in correspondence with the image displayed on the display panel 170.

As described above, in the AV system 100B shown in FIG. 9, at the time of system configuration, the information of the image-receivable resolution stored in the flash ROM 185 of the television receiver 180 is rewritten to indicate the lowest image-receivable resolution (the first mode), the highest image-receivable resolution (the second mode), or the intermediate image-receivable resolution (the third mode) of the television receivers 160A through 160C. Then, the control block 122 of the DVD recorder 120 recognizes the lowest image-receivable resolution (the first mode), the highest image-receivable resolution (the second mode), or the intermediate image-receivable resolution (the third mode) of the television receivers 160A through 160C by analyzing the EDID information read from the flash ROM 185 of the television receiver 180.

Therefore, in the AV system 100B shown in FIG. 9, after the system configuration, the resolution of the image data to be transmitted from the DVD recorder 120 to the television receiver 180 and the television receivers 160A through 160C is matched with the lowest image-receivable resolution (the first mode), the highest image-receivable resolution (the second mode), or the intermediate image-receivable resolution (the third mode) of the television receivers 160A through 160C.

Consequently, in the television receivers 160A through 160C, if the resolution of the received image data is included in the own image-receivable resolution, the image reception based on this image data is enabled. For example, if the resolution of the image data transmitted from the DVD recorder 120 to the television receiver 180 and the television receivers 160A through 160C is equal to the lowest image-receivable resolution (the first mode) of the television receivers 160A through 160C, then the image reception based on the image data transmitted from the DVD recorder 120 is enabled on each of the television receivers 160A through 160C.

Also, in the television receiver 180 of the AV system 100B shown in FIG. 9, at the time of system configuration, the connection switch 196 is turned on when the information of the image-receivable resolution stored in the flash ROM 185 is rewritten. Hence, if the television receivers 160A through the 160C are connected to the television receiver 180 via the HDMI cables 240 through 260, respectively, after the connection of the television receiver 180 to the DVD recorder 120 via the HDMI cable 210, and, when the information of the image-receivable resolution stored in the flash ROM 185 of the television receiver 180 is rewritten, the control block 122 of the DVD recorder 120 recognizes the disconnection and reconnection of the television receiver 180 because of the temporary drop of the 19-pin of the HDMI terminal 181, thereby reading the EDID information from the flash ROM 185 of the television receiver 180 again.

Consequently, even if the television receivers 160A through 160C are connected to the television receiver 180 via the HDMI cables 240 through 260 after the connection of the television receiver 180 to the DVD recorder 120 via the HDMI cable 210, the control block 122 of the DVD recorder 120 can recognize the lowest image-receivable resolution (the first mode), the highest image-receivable resolution (the second mode), or the intermediate image-receivable resolution (the third mode) of the television receivers 160A through 160C by analyzing the EDID information read from the flash ROM 185 of the television receiver 180.

It should be noted that, as described above, at the time of system configuration, the information of the image-receivable resolution stored in the flash ROM 185 of the television receiver 180 is rewritten on the basis of the information of the image-receivable resolutions of the television receivers 160A through 160C. In this case, when the system is cleared by disconnecting the television receivers 160A through 160C from the television receiver 180, the information of the image-image-receivable resolution stored in the flash ROM 185 is restored to the original state that is indicative of the image-image-receivable resolution of the television receiver 180.

Also, as described above, at the time of system configuration, the information of the image-receivable resolution stored in the flash ROM 185 of the television receiver 180 is rewritten to indicate the lowest receivable resolution (the first mode), the highest receivable resolution (the second mode), or the intermediate receivable resolution (the third mode) of the television receivers 160A through 160C; however, it is also practicable to rewrite this information together with the information of the image-receivable resolution of the television receiver 180.

It should be noted that, in the above-mentioned embodiments of the invention, HDMI is used for the communications interface for electronic devices; however, it is also practicable to use communications interface other than HDMI. In addition, in the above-mentioned embodiments of the invention, electronic devices are interconnected by HDMI cables; however, it is also practicable to interconnect electronic devices in a wireless manner, for example.

The embodiments of the present invention are configured so as to supply image-receivable resolutions to a preceding electronic device, these resolutions being considered with the image-receivable resolutions of succeeding electronic devices, thereby providing good image display on the succeeding electronic devices. The present invention is applicable to television receivers having an HDMI repeater capability, for example.

It should be understood by those skilled in the art that various modifications, combinations, sub-combinations and alterations may occur depending on design requirements and other factor in so far as they are within the scope of the appended claims or the equivalents thereof.

## Claims

1. An electronic device comprising:
a signal receiving block (141) configured to receive a video signal transmitted from a preceding electronic device (120) connected via a first transmission route (210);
a signal transmitting block (142) configured to transmit said video signal received at said signal receiving block (141) to a succeeding electronic device (160) connected via a second transmission route (220);
a storage block (143) configured to store information of image-receivable resolution for said preceding electronic device (120) to get said video signal via said first transmission route (210);
an information capturing block (144) configured to capture information of image-receivable resolution from said succeeding electronic device (160) via said second transmission route (220); and
an information rewriting block (144) configured to rewrite the information of said information of image-receivable resolution stored in said storage block (143) on the basis of said information of image-receivable resolution captured by said information capturing block (144).

2. The electronic device according to claim 1, wherein said signal receiving block (141) receives a video signal transmitted from said preceding electronic device (120) via said first transmission route (210) in a differential signal over a plurality of channels and
said signal transmitting block (142) transmits said video signal received by said signal receiving block (141) to said succeeding electronic device (160) in a differential signal via said second transmission route (220) over a plurality of channels.

3. The electronic device according to claim 1, further comprising:
a broadcast receiving block (147) configured to receive a video signal of a predetermined broadcast program on the basis of a broadcast signal;
a switching block (149) configured to selectively output one of the video signal received by said broadcast receiving block (147) and the video signal received by said signal receiving block (141); and
an image display block (150,151) configured to display an image based on the video signal outputted from said switching block (149).

4. The electronic device according to claim 1, further comprising:
a signal generating block configured to generate a connection-indicative signal to be supplied to said preceding electronic device (120) connected via said first transmission route (210); and
a control block configured to, when said information of image-receivable resolution stored in said storage block (143) is rewritten by said information rewriting block (144), temporarily stop the generation of said connection-indicative signal by said signal generating block.

5. The electronic device according to claim 1, wherein, if a first resolution indicated by the information of image-receivable resolution obtained by said information capturing block (144) is lower than a second resolution indicated by the information of image-receivable resolution stored in said storage block (143), said information rewriting block (144) rewrites said information of image-receivable resolution stored in said storage block (143) so as to indicate said first resolution.

6. The electronic device according to claim 1, wherein said information rewriting block (144) rewrites said information of image-receivable resolution stored in said storage block (143) as to indicate a resolution indicated by said information of image-receivable resolution captured by said information capturing block (144).

7. The electronic device according to claim 1, wherein, if there is a plurality of said succeeding electronic devices (140,140A), said information capturing block (144) captures said information of image-receivable resolution from said plurality of succeeding electronic devices (140,140A) via said second transmission route (220) and
said information rewriting block (144) rewrites said information of image-receivable resolution stored in said storage block (143) on the basis of said information of a plurality of image-receivable resolutions captured by said information capturing block (144).

8. The electronic device according to claim 7, wherein, of resolutions indicated by said information of a plurality of image-receivable resolutions captured by said information capturing block (144), said information rewriting block (144) rewrites said information of image-receivable resolution stored in said storage block (143) so as to indicate a lowest resolution.

9. The electronic device according to claim 7, wherein, of resolutions indicated by said information of a plurality of image-receivable resolutions captured by said information capturing block (144), said information rewriting block (144) rewrites said information of image-receivable resolution stored in said storage block (143) so as to indicate a highest resolution.

10. The electronic device according to claim 7, wherein, of resolutions indicated by said information of a plurality of image-receivable resolutions captured by said information capturing block (144), said information rewriting block (144) rewrites said information of image-receivable resolution stored in said storage block (143) so as to indicate a resolution that is intermediate between said lowest resolution and said highest resolution.
